Europäisches Patentamt

European Patent Office

Office européen des brevets

(19)

(11) **EP 0 913 676 A1**

(12) **EUROPEAN PATENT APPLICATION**

(43) Date of publication:
**06.05.1999 Bulletin 1999/18**

(51) Int Cl.$^6$: **G01K 11/20**

(21) Application number: **98308317.1**

(22) Date of filing: **13.10.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **01.11.1997 GB 9723018**

(71) Applicant: **ROLLS-ROYCE PLC**
**London, SW1E 6AT (GB)**

(72) Inventors:
- **Ranson, Robert Marcus**
  **West Bridgford, Nottingham NG2 5GX (GB)**
- **Thomas, Clive**
  **Burton Joyce, Nottingham NG14 5AJ (GB)**
- **McClean, Ian Peter**
  **Summercombe, Brixham, Devon TQ5 0RF (GB)**

(54) **Method and apparatus for temperature measurement**

(57)    A method of temperature measurement using a thermographic phosphor whereby the thermographic phosphor is illuminated by pulsed light. The luminescence or phosphorescence produced is measured and the intensity of the luminescence is measured, resulting in the calculation of the rise time constant of the phosphor and comparing this value with precalibrated data to obtain the temperature measurement of a component.

Fig.1.

## Description

This invention relates to temperature measurement. More particularly but not exclusively this invention relates to non-contact temperature measurement of components, especially those in rotating systems.

When components are located in hostile environments, for example, within a gas turbine engine and especially the combustion chamber, it is difficult to achieve accurate temperature measurement. Prior art technology which has attempted to solve this problem includes pyrometry and thermocouples. However both of these have disadvantages when used to measure the temperature of rotating parts. Pyrometers are unaffected by electromagnetic interference and may be installed for the measurement of rotating parts, however the inability to focus pyrometric equipment onto a specific component means that blackbody emission from surrounding components is also detected. The surface emissivity of the components is also difficult to control, thus the sensor capabilities are limited to the properties of the component under test rather than the sensor itself. Thermocouples are required to be in contact with the component and hence are unsuitable for rotating or moving components. Additionally the hostile corrosive atmosphere and large centrifugal forces that exist reduce the sensor's lifetime due to mechanical breakdown of the thermocouple junction.

A more appropriate method of temperature measurement of rotating parts is the use of phosphor thermography. The process of phosphor thermography relies on the temperature dependence of the decay rate of photoluminescence from a phosphor coated component. Initially the component is coated with a phosphor material which has a known temperature dependent characteristic. Accurate sensing is achieved by creating a table of the temperature dependence of the phosphor. During normal operation, measurement of the necessary characteristic and comparison with the precalibrated data provides the component temperature. Being a remote sensor no physical contact is required thus both static and moving parts can be sensed. Unlike thermocouple based systems, Phosphor Coating Thermography (PCT) may utilise an optical based delivery and return system, thus reducing the level of electromagnetic interference. PCT sensors are focused onto a specific component and are unaffected by surrounding bodies. Additionally PCT sensing is not significantly affected by unclean environments since the temperature dependent properties being analysed are independent of the intensity of the fluorescence or phosphorescence.

The surface of the component to be analysed is first coated with a phosphor material. If the medium to be measured is a gas stream for example, the phosphor material is applied to fibres which are subsequently held within the gas stream. The phosphor is excited by high energy radiation and the subsequent temperature dependent luminescent emission is captured. Analysis and comparison with precalibrated data thus results in the accurate temperature measurement of the component. Temperature dependent properties of the excited luminescence are predominately characterised by the variation of the decay constant (lifetime) . However the sensors measurement range is limited to the temperature dependent region of the phosphor and the speed of sensing is limited to the decay constant at each particular temperature.

An aim of this invention is therefore to provide an improved method and apparatus of temperature measurement.

According to the present invention there is provided a method of temperature measurement comprising the steps of illuminating a thermographic phosphor with pulsed light to produce luminescence of said phosphor: measuring the Intensity (I) of said luminescence characterised by calculating the rise time constant of said phosphor and comparing this value with precalibrated data to obtain temperature measurement.

Fig 1 is a diagrammatic representation depicting the temperature measurement of a material using thermographic phosphors.

Fig 2 is a plot of the intensity of phosphor luminescence against time.

Fig 3 is a plot of the rate of intensity emission variation of $Y_2O_3$:Eu at various temperatures

Fig 4 illustrates the variation in radiative rise time and decay time characteristics for a number of different concentrations of Eu in $Y_2O_3$ as an example.

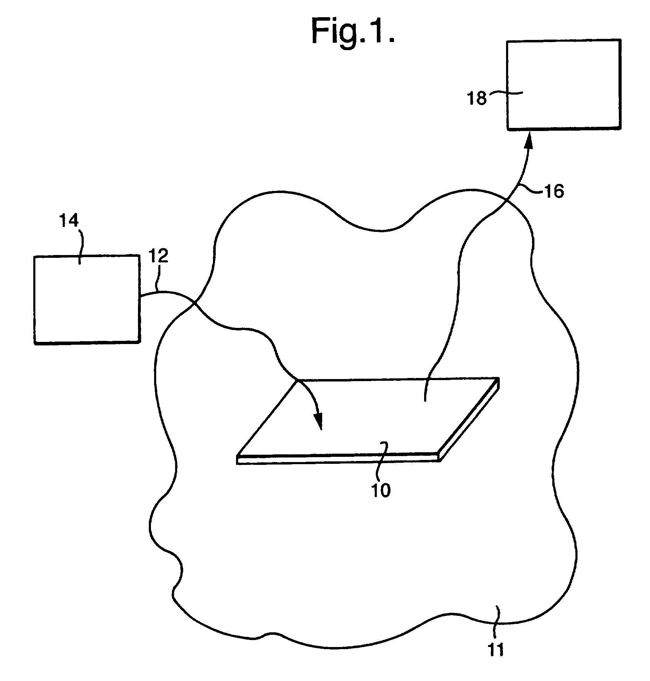

In Figure 1 a thermographic phosphor 10 is applied to a component 11 under test. The phosphor thermographic 10 is excited by a pulse of UV radiation 12 provided by a light source within an optical system 14, which is of short duration. This light source comprises a UV laser coupled to a fibre optic to deliver the laser light to the component 11. Coupling from the laser to the fibre is achieved by standard UV optics. A mounted probe is necessary to direct and focus the existing UV light from the fibre to the thermographic phosphor. The optical system 14 may itself form part of the detector system 18 although fig 1 shows an alternate preferred embodiment where the detector system 18 is separate from the optical system 14. The detector system detects radiation 16 emitted by the thermographic phosphor 10. The thermographic phosphor 10 is one which has a high rate of change of emission over a temperature range of interest. Therefore the thermographic phosphor is chosen in light of the characteristics needed for a particular temperature measurement. For example one suitable phosphor is Yttrium Oxide : Europium activated ($Y_2O_3$ : Eu).

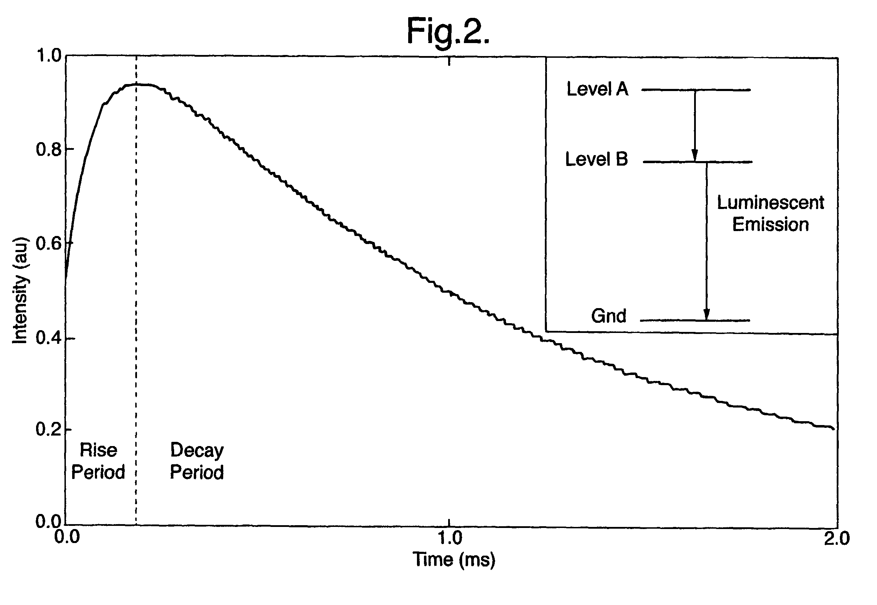

While excitation is occurring electrons are excited from the ground state into higher energy states (levels A and B). Once excitation has ceased electrons from the level A state decay into level B state at a particular decay rate, r. At the same time electrons from level B are also undergoing thermal detrapment and decay to the ground state at an independent rate d resulting in the emission of fluorescence/phosphorescence at particular wavelengths as shown in figure 2. This emission is directed through filters into the detector system 18. These filters separate a wavelength or particular wavelengths from the fluorescent /phosphorescent signal and reduce the UV laser energy and blackbody radiation coupling to the detector 18.

As intensity of the fluorescent/phosphorescent emission, e.g. 611nm is proportional to the number of electrons undergoing detrapment the following equation can be used to define the fluorescent life time.

$$I \alpha \ (A_0(1\text{-}\exp\text{-}\{\frac{t\text{-}t_0}{\tau_r}\})+ B_0)\exp\text{-}\{\frac{t\text{-}t_0}{\tau_d}\}$$

I is the emission intensity and A is the number of electrons directly excited in energy level A and B is the number of electrons available to decay radiatively from energy level B at t. $\tau_r$ is the decay-constant for transitions from energy level; A to B and $\tau_d$ is the decay of the fluorescent or phosphorescent emission. The emission intesnsity is shown in figure 2.

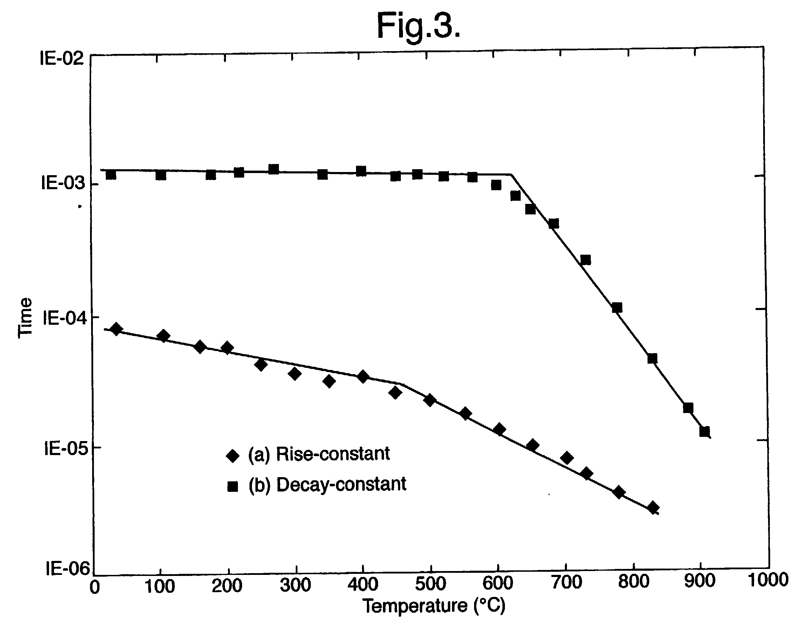

Referring now to figure 3 the range of decreasing time constant is shown for both rise time and decay-constant over a specified range of temperatures. The operating range for rise-constant based measurement is wider, being between 25°C and 850°C. In contrast the decay-constant is non-varying until 600°C above which it has use as a temperature sensor. Advantageously the rise time analysis has a greatly improved temperature measurement range. Figure 2 also illustrates that the measured rise constant is over an order of magnitude shorter than the equivalent decay-constant. This shorter rise-constant thus allows much faster systems to be analysed accurately thus advantageously providing an improvement of conventional decay constant systems.

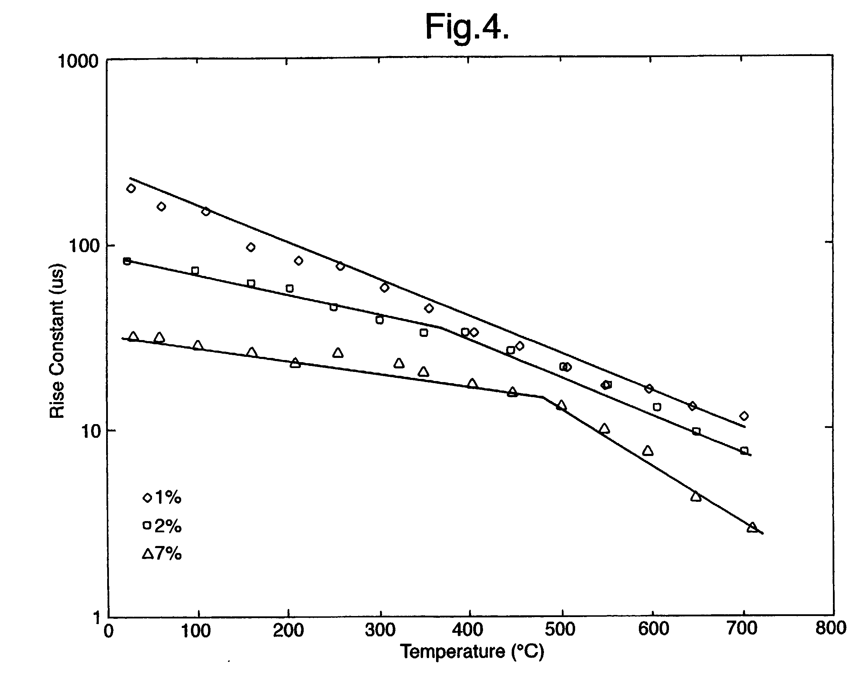

With regard to figure 4 it is clear that the rise time constant varies with differing concentrations of Eu. An increase in the concentration of Eu provides a corresponding decrease in the rise-constant. The thermographic sensor is therefore chosen to fit each particular application or component to be tested.

Therefore the rise time constant of the luminescence of the thermographic phosphor is calculated and this calculated rise time constant is compared with precalibrated data to obtain the temperature of the thermographic phosphor and hence the temperature of the component.

Thermographic temperature measurement using rise time constant analysis provides a wider temperature measurement range and a faster response than the prior art decay-constant method, extending the field of application to, for example, turbine blades, generators and other technology where fast rotating speeds are encountered. Also the material composition allows a more flexible sensing capability.

## Claims

1. A method of temperature measurement comprising the steps of illuminating a thermographic phosphor (10) with pulsed light to produce luminescence of said thrmographic phosphor (10), measuring the Intensity (I) of said luminescence characterised by calculating the rise time constant of said phosphor and comparing this value with precalibrated data to obtain temperature measurement.

2. A method according to claim 1 wherein said thermographic phosphor comprises a Yttrium oxide based phosphor doped with a rare earth ion.

3. A method according to claim 1 wherein said thermographic phosphor comprises Yttrium Oxide : Europium activated.

4. A method according to claim 1 wherein said thermographic phosphor comprises Yttrium Aluminium Garnet : Europium activated.

5. A method according to claim 1 wherein the said thermographic phosphor is adapted to provide at least two higher energy states to facilitate thermal detrapment and provide a rise-time for the luminescent signal.

# Fig.1.

Fig.2.

Fig.3.

# Fig.4.

EP 0 913 676 A1

**European Patent Office**

# EUROPEAN SEARCH REPORT

**Application Number**

EP 98 30 8317

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 009, no. 157 (P-369), 2 July 1985 -& JP 60 035230 A (TATEISHI DENKI KK), 23 February 1985 * abstract * | 1,5 | G01K11/20 |
| A | PATENT ABSTRACTS OF JAPAN vol. 007, no. 139 (C-171), 17 June 1983 -& JP 58 052382 A (TOKYO SHIBAURA DENKI KK), 28 March 1983 * abstract * | 2,3 | |
| A | ALLISON S W: "TAKING AN ENGINE'S TEMPERATURE" MECHANICAL ENGINEERING, vol. 119, no. 1, January 1997, pages 72-74, XP000694497 * the whole document * | 1,4 | |
| | | | TECHNICAL FIELDS SEARCHED (Int.Cl.6) |
| | | | G01K |

The present search report has been drawn up for all claims

| Place of search | Date of completion of the search | Examiner |
|---|---|---|
| THE HAGUE | 27 January 1999 | Ramboer, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)